# EUROPEAN PATENT APPLICATION

(11) **EP 3 675 019 A1**
(43) Date of publication of application: **01.07.2020**
(21) Application number: 19190656.9
(22) Date of filing: 08.08.2019
(51) Int. Cl.: G06Q 30/06, G06Q 50/12, G06Q 10/06, G08B 7/06

(54) **CONTROL DEVICE AND TERMINAL CONTROL SYSTEM**

(30) Priority: 25.12.2018 JP 2018241262
(71) Applicant: Toshiba Tec Kabushiki Kaisha, 141-8562 Tokyo (JP)
(72) Inventor: SAWA, Hiroshi, Shinagawa-ku,, Tokyo 141-8562 (JP)
(74) Representative: Bandpay & Greuter

(57) **Abstract**

According to an embodiment, a control device includes a storing section and a control section. The storing section stores, concerning each of a plurality of terminal devices that output information, setting data indicating a part of an area where the terminal device is used. The control section outputs, in response to a call request transmitted from a transmitter, based on a setting area where the transmitter at a call request source is set and the setting data, information corresponding to the call request to the terminal device used in an area corresponding to the setting area indicated by the setting data among the plurality of terminal devices.

## Description

### FIELD

Embodiments described herein relate generally to a control device and a terminal control system.

### BACKGROUND

In recent years, in a large restaurant, a restaurant system that performs orders of commodities, calls of employees, and the like using an electronic device and a communication network (wireless communication or wired communication) has been introduced. For example, an employee carries a handy terminal and operates the handy terminal to thereby input commodities ordered in every table. The handy terminal transmits information concerning the input ordered commodities to a station (a server) provided in the restaurant. The server stores the commodity information received from the handy terminal and executes calculation for accounting processing.

A transmitter that transmits a request for an employee call is set in each table disposed in the restaurant. The transmitter transmits an employee call request according to operation by a customer. In this case, a reception display set in the restaurant can inform the employees that there is the call request from the customer by displaying a table number of the table from which the call request is transmitted or notifying the handy terminal carried by the employee.

In a large store including a plurality of floors (a plurality of stories) or a wide floor, a plurality of reception displays are sometimes set. The large store is sometimes operated to allocate in-charge tables respectively to a plurality of employees and deal with receptions or orders and calls concerning customers in the in-charge tables.

If there is a call from a customer in any one of the tables, a table number of the table is displayed on all the reception displays and notified to handy terminals carried by all the employees. In this case, it is possible to prevent all the employees from not noticing the call request from the customer. It is possible to reduce a loss of sales opportunities of commodities, dissatisfaction with customer service from customers, and the like.

On the other hand, calls from customers in tables other than the in-charge table are also notified to the employee. Therefore, the employee has to confirm whether the employee should deal with notifications of all calls or other employees should deal with the notifications. Therefore, confusions are likely to occur. In particular, the employee does not always perform jobs in the same area. For example, the employee sometimes moves to another floor where many customers are visiting and performs jobs for support. Confirmation corresponding to a present situation is necessary for a notification of a call. That is, in the existing system, a burden on the employee responding to a call from a customer is large.

Related art is described in, for example, JP-A-2012-137907.

### SUMMARY OF INVENTION

To solve such problem, there is provided a control device comprising: a storing section configured to store, concerning each of a plurality of terminal devices that output information, setting data indicating a part of an area where the terminal device is used; and a control section configured to output, in response to a call request transmitted from a transmitter, based on a setting area where the transmitter at a call request source is set and the setting data, information corresponding to the call request to the terminal device used in an area corresponding to the setting area indicated by the setting data among the plurality of terminal devices.

Preferably, the device further comprises a change setting section configured to change the area indicated by the setting data corresponding to each of the terminal devices.

Preferably still, the change setting section sets temporary data indicating an area corresponding to the terminal device, the temporary data enabling notification of a call request in a preset fixed period.

Preferably yet, the control section causes the storing section to store call data indicating call requests transmitted from a plurality of the transmitters, the call requests being received from a plurality of receiving devices respectively set in a different plurality of the setting areas, and outputs information corresponding to the call requests to the terminal device used in an area corresponding to the setting area where the transmitter at a transmission source of the call data is set.

The invention also relates to a terminal control system comprising: a plurality of terminal devices configured to output information and; the control device described above.

The invention also concerns a method for controlling a plurality of terminal devices, the method comprising steps of: storing, concerning each of the plurality of terminal devices that output information, setting data indicating a part of an area where the terminal device is used; and outputting, in response to a call request transmitted from a transmitter, based on a setting area where the transmitter at a call request source is set and the setting data, information corresponding to the call request to the terminal device used in an area corresponding to the setting area indicated by the setting data among the plurality of terminal devices.

Preferably, the method further comprises a step of: changing the area indicated by the setting data corresponding to each of the terminal devices.

Preferably still, the method further comprises a step of: setting temporary data indicating an area corresponding to the terminal device, the temporary data enabling notification of a call request in a preset fixed period.

Preferably yet, the method further comprises a step of: storing call data indicating call requests transmitted from a plurality of the transmitters, the call requests being received from a plurality of receiving devices respectively set in a different plurality of the setting areas, and outputs information corresponding to the call requests to the terminal device used in an area corresponding to the setting area where the transmitter at a transmission source of the call data is set.

The invention further relates to a computer program comprising instructions which, when the program is executed by a computer, cause the computer to carry out the steps of the method described above.

The invention further concerns a computer-readable medium having stored thereon the computer program described above.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram illustrating an example of an overall configuration of a restaurant system set in a restaurant in an embodiment;
FIG. 2 is a block diagram illustrating a hardware configuration of a handy terminal in the embodiment;
FIG. 3 is a block diagram illustrating a hardware configuration of a station in the embodiment;
FIG. 4 is a block diagram illustrating a hardware configuration of a call bell display in the embodiment;
FIG. 5 is a plan view illustrating an example of an exterior configuration of the handy terminal;
FIGS. 6A and 6B are diagrams illustrating a display example in a display section of the handy terminal;
FIG. 7 is a diagram illustrating an example of an overall configuration of a restaurant system different from the restaurant system illustrated in FIG. 1;
FIG. 8 is a diagram illustrating an example of a data configuration of an allocation management table in the embodiment;
FIG. 9 is a diagram illustrating an example of a data configuration of a call source management table in the embodiment;
FIG. 10 is a flowchart illustrating information display processing in the embodiment;
FIG. 11 is a diagram illustrating a flow of data of a terminal control system in the embodiment;
FIG. 12 is a diagram schematically illustrating a relation between a tabletop transmitter that transmits a call request and a handy terminal to which display data is transmitted in the embodiment;
FIG. 13 is a diagram illustrating a situation in which the handy terminal moves between areas;
FIG. 14 is a diagram schematically illustrating, if intra-floor areas are set, a relation between tabletop transmitters that transmit call requests and handy terminals to which display data is transmitted;
FIG. 15 is a flowchart illustrating change setting processing of the handy terminal;
FIG. 16 is a flowchart illustrating change setting processing of the station;
FIG. 17 is a diagram illustrating a flow of processing in the handy terminal and the station in execution of the change setting processing; and
FIG. 18 is a diagram illustrating an example of a setting screen displayed on a display section of the handy terminal.

### DETAILED DESCRIPTION

An object of embodiments is to provide a control device and a terminal control system that can notify, in response to a call from a customer, the call to an appropriate terminal device corresponding to a situation of an employee.

According to an embodiment, a control device includes a storing section and a control section. The storing section stores, concerning each of a plurality of terminal devices that output information, setting data indicating a part of an area where the terminal device is used. The control section outputs, in response to a call request transmitted from a transmitter, based on a setting area where the transmitter at a call request source is set and the setting data, information corresponding to the call request to the terminal device used in an area corresponding to the setting area indicated by the setting data among the plurality of terminal devices.

An embodiment is explained below with reference to the drawings.

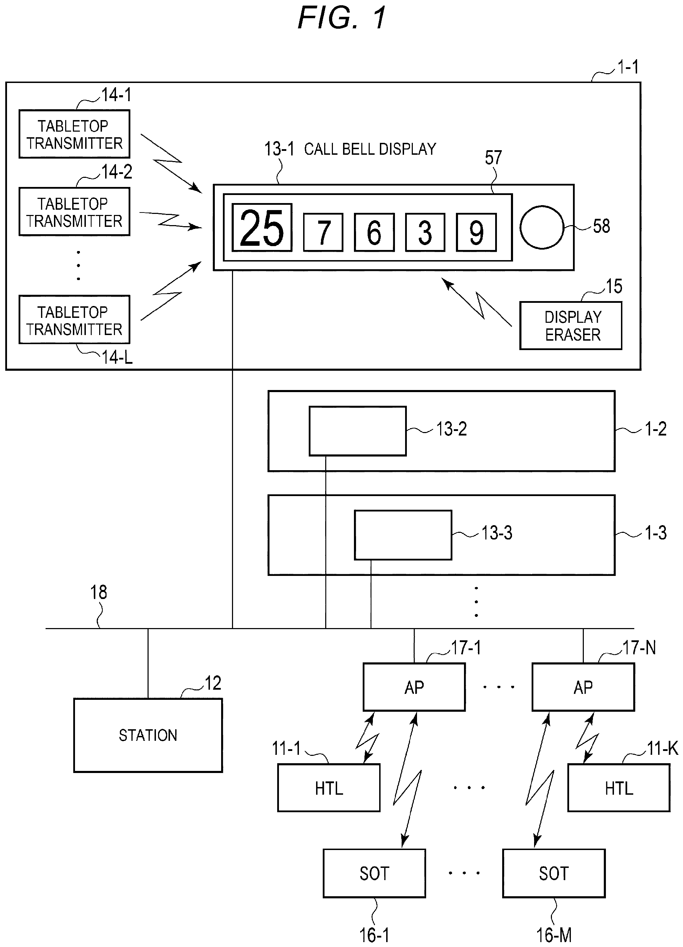

FIG. 1 is a diagram illustrating an example of an overall configuration of a restaurant system set in a restaurant in this embodiment. The restaurant system is a system that performs orders of commodities, calls of employees, and the like using an electronic device and a communication network (wireless communication or wired communication).

In FIG. 1, a configuration (a terminal control system) related to calls of employees by customers is illustrated. The restaurant system includes, although not illustrated in FIG. 1, a kitchen printer and a kitchen display for notifying order contents from the customers to a kitchen and the like and a POS (Point Of Sales) terminal for executing accounting processing and the like.

It is assumed that the restaurant system illustrated in FIG. 1 is used in a large store including a plurality of floors (a plurality of stories) or a wide floor.

The restaurant system (the terminal control system) illustrated in FIG. 1 includes a plurality of call systems 1 (1-1, 1-2, 1-3, ...), a plurality of handy terminals (HTLs) 11 (11-1, ... , and 11-K), a station 12, a plurality of self-order terminals (SOTs) 16 (16-1, ... , and 16-M), and a plurality of access points 17 (17-1, ... , and 17-N). Call bell displays 13 (13-1, 13-2, 13-3, ...) are respectively provided in the call systems 1-1, 1-2, 1-3, ....

The call system 1-1 includes a plurality of tabletop transmitters 14 (14-1, 14-2, ... , and 14-L) and a display eraser 15 besides the call bell display 13-1. The plurality of tabletop transmitters 14 are respectively set on, for example, tables disposed in the store. The tabletop transmitter 14 transmits, according to operation (button pressing, etc.) by a customer, a call request including identification information (e.g., a table numbers) of the table, on which the tabletop transmitter 14 is set, to the call bell display 13-1. In response to reception of the call request, the call bell display 13-1 causes a display device 57 to display, for example, the table number indicating a call request source and causes a speaker 58 to output sound indicating that the call request is received.

The call bell display 13-1 stores, for example, maximum fifty call requests (table numbers) received from the tabletop transmitters 14 and causes the display device 57 to display five table numbers received earlier. The display eraser 15 is a device for instructing erasing of a table number displayed on the call bell display 13-1. In the display eraser 15, for example, after an employee performs customer service in a table indicated by the table number displayed on the call bell display 13-1, the table number for which the customer service is completed is designated by the employee. The display eraser 15 notifies, according to the designation by the employee, an erasing request for the pertinent table number to the call bell display 13-1.

The call systems 1-2, 1-3, ... are configured the same as the call system 1-1. That is, the call bell displays 13-2, 13-3, ... of the call systems 1-2, 1-3, ... receive call requests from the tabletop transmitters 14 used in the respective systems and notify the reception of the call requests with the display devices 57 and the speakers 58.

In this embodiment, the plurality of call systems 1-1, 1-2, 1-3, ... are provided for each area in the store. In the area in the store, for example, if the store is divided into a plurality of floors (stories), the call system 1 is set in each of the floors. If one floor is wide, it is also possible to divide the one floor into a plurality of areas and set the call system 1 in each of the areas. For example, if the areas are divided into a south side and a north side of the floor, the call system 1 is set in each of the south side area and the north side area. Each call system 1 receives, with the call bell display 13, a call request from the tabletop transmitter 14 set on, for example, a table included in the area of the call system 1.

The station 12 is connected to the plurality of call bell displays 13 (13-1, 13-2, 13-3, ...), the plurality of access points 17 (17-1, ... , and 17-N), the kitchen printer (not illustrated in FIG. 1), the kitchen display (not illustrated in FIG. 1), and a POS terminal (not illustrated in FIG. 1) by, for example, a LAN (Local Area Network) 18 laid in the store. The plurality of access points 17 are connected to the handy terminals 11 and the self-order terminals 16 by wireless communication. Therefore, the station 12 is mutually connected to the handy terminals 11 and the self-order terminals 16 through the access points 17. The plurality of access points 17 are communication devices that perform wireless communication. The plurality of access points 17 are set in positions where wireless communication with the handy terminals 11 and the self-order terminals 16 are possible in all areas in the store.

The station 12 is an information device that controls the entire restaurant system (terminal control system). The station 12 executes, for example, order processing for processing order data indicating commodities ordered by a customer, the processing order data being received from the handy terminal 11 or the self-order terminal 16. The station 12 executes, for example, information display processing for transmitting, to the handy terminal 11, a notification corresponding to a call request (including a table number) from a customer received from the call bell display 13 (the tabletop transmitter 14) or the self-order terminal 16 and change setting processing for setting an area where the handy terminal 11 is used. In the information display processing by the station 12, the station 12 outputs, based on an area where the tabletop transmitter 14 or the self-order terminal 16 at a call request source is set, information corresponding to the call request to, among the plurality of handy terminals 11, a part of the handy terminals 11 used in an area corresponding to the area where the tabletop transmitter 14 or the self-order terminal 16 is set. That is, the station 12 notifies, through the handy terminal 11, an employee in charge of an area where the customer performing the call request is present that there is the call request.

Table numbers (table Nos.) indicating tables on which the tabletop transmitter 14 and the self-order terminal 16 are respectively set are stored in the tabletop transmitter 14 and the self-order terminal 16. If calls for employees are instructed according to operation by customers, the tabletop transmitter 14 and the self-order terminal 16 transmit readout requests including data indicating table numbers.

The handy terminal 11 transmits and receives data by radio to and from the access point 17. Employees in charge of customer service respectively carry the handy terminals 11 and perform customer service. If receiving an order of menu items from a customer, an employee inputs order data of the order to the handy terminal 11. The order data input to the handy terminal 11 is wirelessly transmitted to the access point 17 and taken into the station 12.

The handy terminal 11 receives display data corresponding to a call request by a customer from the station 12 and performs display for notifying the call from the customer to the employees. The display data includes data of table numbers arrayed in order of earlier reception of call requests. In this embodiment, the plurality of handy terminals 11 respectively carried by the employees are used in any one of the areas in the store or managed by the station 12. The station 12 outputs information corresponding to a call request to, among all the handy terminals 11 used in the store, a part of the handy terminals 11 used in an area where a call request source (the tabletop transmitter 14 or the self-order terminal 16 operated by the customer for the call request) is set.

The handy terminal 11 is a form of a terminal device that receives orders and outputs information. Another information device (a tablet terminal, etc.) may be used in the system instead of the handy terminal 11.

The self-order terminal 16 is configured by, for example, a tablet terminal including a touch screen. A customer can instruct an order of a commodity and transmission of a call request by touching a position of a menu or a button displayed on the touch screen of the self-order terminal 16.

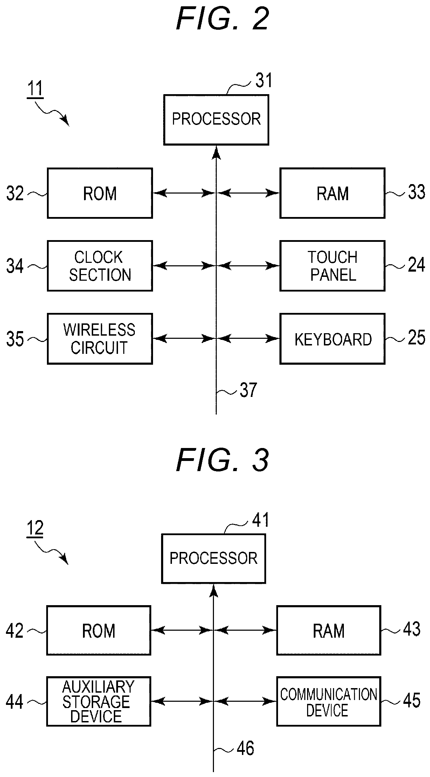

FIG. 2 is a block diagram illustrating a hardware configuration of the handy terminal 11 in this embodiment.

The handy terminal 11 includes a processor (a CPU (Central Processing Unit), etc.) 31, a ROM (Read Only Memory) 32, a RAM (Random Access Memory) 33, a clock section 34, and a wireless circuit 35. The processor 31, the ROM 32, the RAM 33, the clock section 34, and the wireless circuit 35 are connected to a bus line 37 such as an address bus or a data bus. A touch panel 24 and a keyboard 25 are also connected to the bus line 37 via a not-illustrated input and output circuit.

The processor 31 is a circuit for controlling the sections based on computer programs stored in the ROM 32 in order to realize various operations of the handy terminal 11. The ROM 32 and the RAM 33 store data referred to by the processor 31 in performing various kinds of processing besides various computer programs executed by the processor 31.

The computer programs executed by the processor 31 include computer programs for executing, for example, call reception processing for receiving, from the station 12, a notification corresponding to a call request from a customer and displaying the notification and change setting processing for changing an area in the store where the handy terminal 11 is used besides order input processing for inputting an order of commodities from a customer.

The clock section 34 clocks the present time. The wireless circuit 35 controls transmission and reception of data performed between the handy terminal 11 and the access point 17 using radio.

FIG. 3 is a block diagram illustrating a hardware configuration of the station 12 in this embodiment.

The station 12 includes a processor (a CPU (Central Processing Unit), etc.) 41, a ROM 42, a RAM 43, an auxiliary storage device 44, a communication device 45, and a bus line 46.

The processor 41 configures a main control section. The ROM 42 is a read-only main memory. The RAM 43 is a readable and writable main memory. The auxiliary storage device 44 is a storage device capable of storing a large volume of data, for example, a HDD (Hard Disk Drive) or an SSD (Solid State Drive). The communication device 45 manages data communication between the station 12 and the sections connected via the LAN 18. The bus line 46 including an address bus and a data bus electrically connects the processor 41 and the ROM 42, the RAM 43, the auxiliary storage device 44, and the communication device 45.

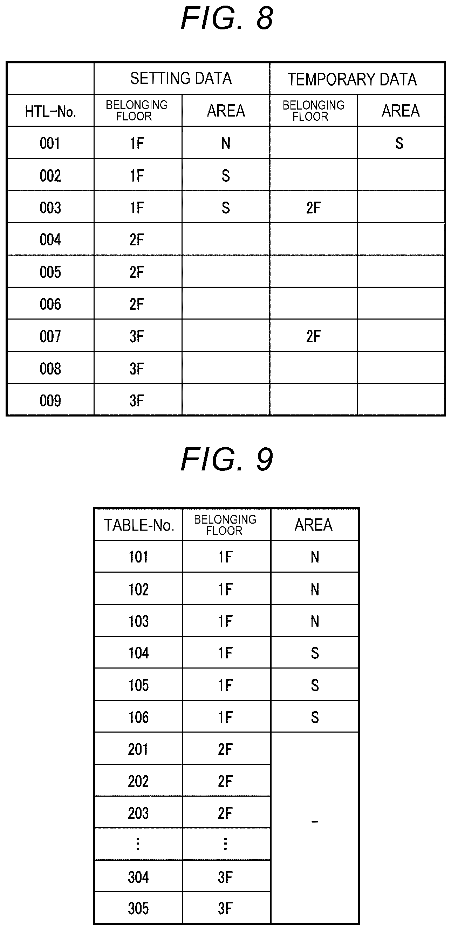

The processor 41 is a circuit for controlling the sections based on computer programs stored in the RAM 43 and the ROM 42 in order to realize various operations of the station 12. The ROM 42, the RAM 43, and the auxiliary storage device 44 record data referred to by the processor 41 in performing various kinds of processing besides various computer programs executed by the processor 41. For example, an allocation management table (see FIG. 8) and a call source management table (see FIG. 9) are stored in the auxiliary storage device 44. The allocation management table is data referred to, according to a call request from a customer, in order to discriminate the handy terminal 11 set as a notification destination. The call source management table is data for managing a setting place of the tabletop transmitter 14 or the self-order terminal 16, that is, an area to which a table where a call source customer to be served is present belongs. All or a part of the allocation management table and the call source management table may be stored in the RAM 43 or the ROM 42.

The computer programs executed by the processor 41 include computer programs for executing, for example, information display processing for causing the handy terminal 11 to output a notification corresponding to a call request from a customer and change setting processing for changing an area in the store where the handy terminal 11 is used besides order processing for processing order data indicating commodities ordered by a customer input from the handy terminal 11 or the self-order terminal 16.

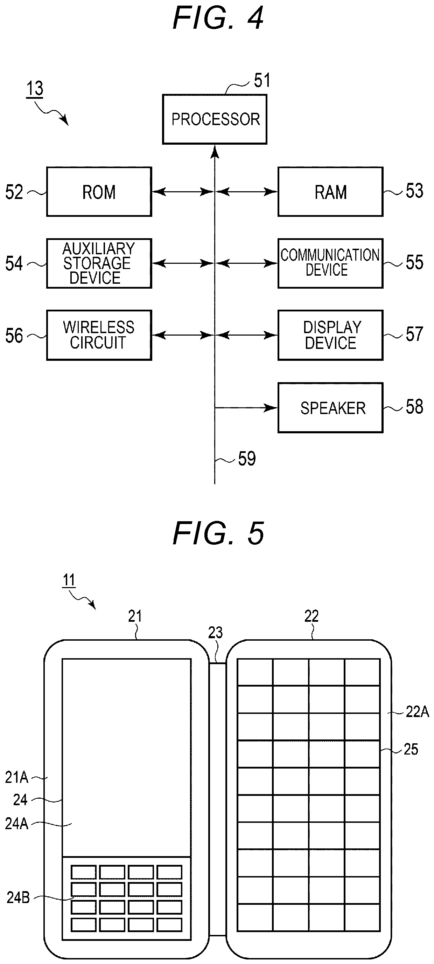

FIG. 4 is a block diagram illustrating a hardware configuration of the call bell display 13 in this embodiment.

The call bell display 13 includes a processor (a CPU (Central Processing Unit), etc.) 51, a ROM 52, a RAM 53, an auxiliary storage device 54, a communication device 55, a wireless circuit 56, a display device 57, a speaker 58, and a bus line 59.

The processor 51 configures a main control section. The ROM 52 is a read-only main memory. The RAM 53 is a readable and writable main memory. The auxiliary storage device 54 is a storage device capable of storing a large volume of data, for example, a HDD (Hard Disk Drive) or an SSD (Solid State Drive). The communication device 55 manages data communication between the call bell display 13 and the sections connected via the LAN 18. The wireless circuit 56 controls reception of data indicating a call request performed between the call bell display 13 and the tabletop transmitter 14 using radio. The bus line 59 including an address bus and a data bus electrically connects the processor 51 and the ROM 52, the RAM 53, the auxiliary storage device 54, the communication device 55, the wireless circuit 56, the display device 57, and the speaker 58.

The processor 51 is a circuit for controlling the sections based on computer programs stored in the RAM 53 and the ROM 52 in order to realize various operations of the call system 1. The ROM 52, the RAM 53, and the auxiliary storage device 54 record data referred to by the processor 51 in performing various kinds of processing besides various computer programs executed by the processor 51.

The computer programs executed by the processor 51 include computer programs for executing, for example, output processing for controlling display of a table number in the display device 57 corresponding to the stored table number and a sound output from the speaker 58 corresponding to reception of a call request, display erasing processing for erasing the stored table number according to an erasing request from the display eraser 15, and transmission processing for transmitting, according to a data acquisition request from the station 12, call data corresponding to stored table numbers (e.g., maximum fifty table numbers) besides storage processing for receiving a call request from the tabletop transmitter 14 and causing the RAM 53 or the auxiliary storage device 54 to store a table number included in the call request.

FIG. 5 is a plan view illustrating an example of an exterior configuration of the handy terminal 11 in this embodiment.

In FIG. 5, the handy terminal 11 includes a first body 21 disposed on the left side and a second body 22 disposed on the right side. Both of the first body 21 and the second body 22 are formed in a substantially rectangular parallelepiped shape. The second body 22 is turnably coupled to the first body 21 via a fastener 23 such as a hinge. The second body 22 is enabled to open and close by the fastener 23 between a state in which the second body 22 is opened with respect to the first body 21 (see FIG. 5) and a closed state (not illustrated in FIG. 5).

The touch panel 24 is disposed on an inner surface 21A of the first body 21 exposed if the second body 22 is opened with respect to the first body 21. The keyboard 25 is disposed on an inner surface 22A of the second body 22 exposed if the second body 22 is opened with respect to the first body 21. The touch panel 24 is divided into a display section 24A and a key section 24B. The touch panel 24 and the keyboard 25 configure an operation section.

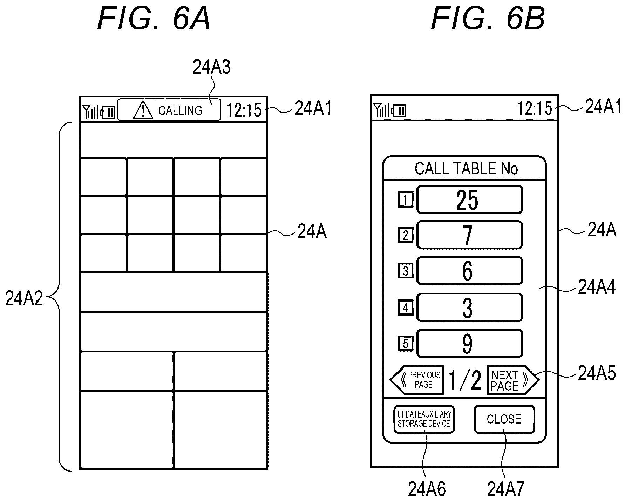

FIGS. 6A and 6B are diagrams illustrating a display example on the display section 24A of the handy terminal 11 in this embodiment.

FIG. 6A illustrates a display example in an order input mode. A status bar area 24A1 is provided in an upper part of the display section 24A. In the order input mode, a menu display area 24A2 is provided besides the status bar area 24A1. In the status bar area 24A1, icons representing reception sensitivity, battery residual power, and the like, time, and the like are always displayed irrespective of a mode. In this embodiment, if display data notifying a call request is received from the station 12 during display of the order input mode, a call message 24A3 (e.g., "calling") is displayed in the status bar area 24A1. A plurality of menu items are displayed in individual display areas (not illustrated in FIG. 6A) in order to input orders of commodities from a customer. An employee can input order data of ordered commodities by touching display areas of names of the ordered commodities.

FIG. 6B illustrates a display example displayed if display data notifying a call request is received from the station 12 during standby (during an idle mode) other than the order input mode. In this case, a call table number list 24A4 is displayed on the display section 24A. Table numbers of tables where call requests from customers are performed are displayed as a list in the call table number list 24A4 according to the display data received from the station 12. In the example illustrated in FIG. 6B, five table numbers are displayed in order of earlier reception of call requests. Not only when the display data is received from the station 12, the call table number list 24A4 may be displayed according to operation of the keyboard 25 or the key section 24B by an employee.

A page change button 24A5 is provided in the call table number list 24A4. The page change button 24A5 includes a previous page button and a next page button. The page change button 24A5 is a button for switching, if there are six or more call requests and not all of table numbers can be displayed on one screen, display to list display of table numbers not displayed on the screen.

An update button 24A6 and a close button 24A7 are provided in the display section 24A. The update button 24A6 is a button for instructing the station 12 to transmit the latest call request (display data). The close button 24A7 is a button for instructing a display end of the call table number list 24A4.

Another form of the restaurant system (the terminal control system) in this embodiment is explained.

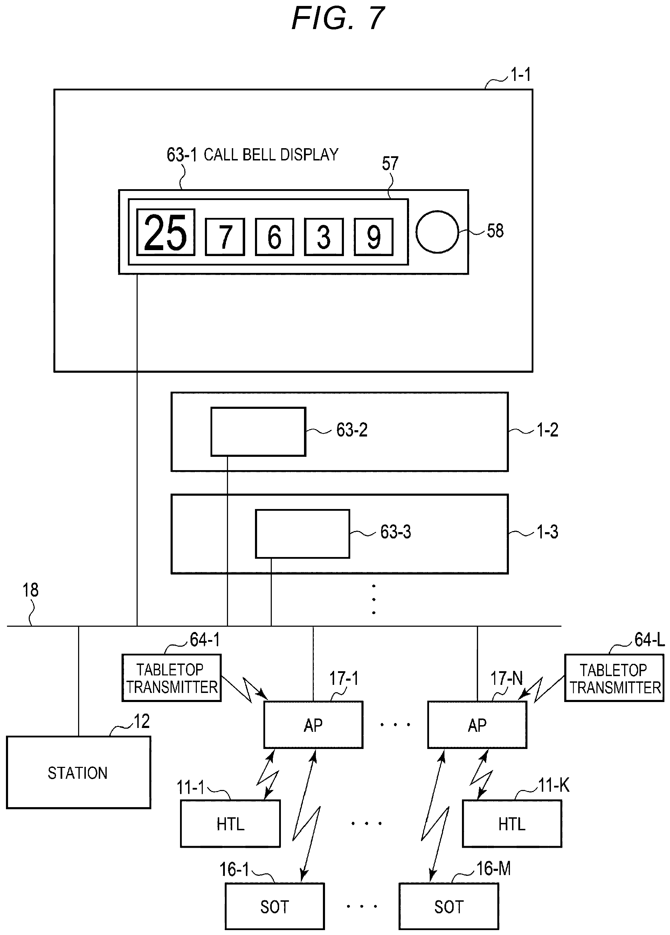

FIG. 7 is a diagram illustrating an example of an overall configuration of a restaurant system different from the restaurant system illustrated in FIG. 1 in this embodiment. In FIG. 7, the same components as the components illustrated in FIG. 1 are denoted by the same reference numerals and signs. In the restaurant system illustrated in FIG. 1, the station 12 acquires, through the call bell displays 13, call requests from customers by the operation of the tabletop transmitters 14. The restaurant system illustrated in FIG. 7 receives, with access points 17, call requests from a plurality of tabletop transmitters 64 (64-1, ... , and 64-L). The station 12 acquires the call requests from the tabletop transmitters 64 (64-1, ... , and 64-L) through the access points 17. Call bell displays 63 (63-1, 63-2, 63-3, ...) in the restaurant system illustrated in FIG. 7 may be configured the same as the call bell displays 13 (13-1, 13-2, 13-3, ...) or may be configured by removing components related to reception from the tabletop transmitters 14 and the display eraser 15. The call bell displays 63 (63-1, 63-2, 63-3, ...) execute, according to control by the station 12, display of table numbers in the display devices 57 and output of sound from the speakers 58 corresponding to call requests received from the tabletop transmitters 64 or the self-order terminals 16.

In both the cases of the restaurant systems illustrated in FIGS. 1 and 7, the station 12 can execute, basically in the same manner, information display processing for notifying call requests from customers to the handy terminals 11. In the following explanation, the information display processing in the case of the restaurant system illustrated in FIG. 1 is mainly explained.

A control method for allocating a part of notifications of call requests to the handy terminals 11 by the station 12 in this embodiment is explained.

FIG. 8 is a diagram illustrating an example of a data configuration of an allocation management table stored in the auxiliary storage device 44 of the station 12. The processor 41 inputs data of the allocation management table, for example, through a portable external storage medium or through the LAN 18 and causes the auxiliary storage device 44 to store the data. The processor 41 can change, based on data received from the handy terminals 11, the data set in the allocation management table.

As illustrated in FIG. 8, in the allocation management table, data indicating areas (assigned floors or intra-floor areas) where the handy terminals 11 are used is set in association with peculiar identification information (handy terminal numbers (HTL-Nos.) respectively set in the handy terminals 11 used in the store. In this embodiment, the allocation management table includes setting data for continuously enabling notification of a call request and temporary data for enabling notification of a call request in a preset fixed period. The temporary data is set based on, for example, data received from the handy terminals 11. The temporary data is set, for example, if an employee temporarily moves to another floor and performs customer service. If the temporary data is set, the processor 41 of the station 12 discriminates, based on the temporary data, the handy terminal 11 at a call notification destination referring to the temporary data more preferentially than the setting data.

In this embodiment, for example, besides being set for each floor included in the store, the areas where the handy terminals 11 are used can be set, for example, on a south side and a north side by dividing one floor into a plurality of areas. Concerning the area, it is possible to optionally set the area for each store rather than only setting the area for each floor of dividing one floor into a plurality of areas.

The setting data of the allocation management table illustrated in FIG. 8 indicates that the handy terminals 11 of handy terminal numbers 001 to 003 are used in the first floor (1F) of the store, the handy terminals 11 of handy terminal numbers 004 to 006 are used in the second floor (2F) of the store, and the handy terminals 11 of handy terminal numbers 007 to 009 are used in the third floor (3F) of the store. Further, the setting data indicates that the first floor of the store is divided into areas on a south side and a north side, the handy terminal 11 of a handy terminal number 001 is used in an intra-floor area (N) on the north side and the handy terminals 11 of handy terminal numbers 002 and 003 are used in an intra-floor area (S) on the south side.

In the temporary data of the allocation management table illustrated in FIG. 8, the handy terminal 11 of the handy terminal number 001 is changed to be used in the area on the north side from the south side in the first floor (1F) of the store. The temporary data is changed to indicate that the handy terminals 11 of the handy terminal numbers 003 and 007 are used in the second floor (2F) of the store because jobs in the second floor are busy and employees in the first floor and the third floor are moved to the second floor for support.

The temporary data of the allocation management table enables notification of call requests, for example, in a preset fixed period and is deleted after the set fixed period elapses. The preset period can be optionally determined as, for example, a period designated by operation by an employee in the handy terminal 11, a period until a date is updated, and a preset number of days.

FIG. 9 is a diagram illustrating an example of a data configuration of a call source management table stored in the auxiliary storage device 44 of the station 12. The call source management table is data for managing setting places of the tabletop transmitters 14 or the self-order terminals 16, that is, areas to which tables where call source customers to be served are present belongs.

The call source management table illustrated in FIG. 9 indicates that the tabletop transmitters 14 or the self-order terminals 16 for which table numbers 101 to 106 are set are set in tables in the first floor (1F) of the store, the tabletop transmitters 14 or the self-order terminals 16 for which table numbers 201, 202, 203, ... are set in tables in the second floor (2F) of the store, and the tabletop transmitters 14 or the self-order terminals 16 for which table numbers ... 304, and 305 are set are set in tables in the third floor (3F) of the store. Further, the call source management table indicates that the tabletop transmitters 14 or the self-order terminals 16 for which the table numbers 101 to 103 are set are set in tables in the area on the north side (N) in the first floor and the tabletop transmitters 14 or the self-order terminals 16 for which the table numbers 104 to 106 are set are set in tables in the area on the south side (S) in the first floor.

If a call request including a table number is received from the tabletop transmitter 14 or the self-order terminal 16, the processor 41 of the station 12 can discriminate, referring to the call source management table, from a customer in which table (are) a call is received.

The operation of the terminal control system in this embodiment is explained.

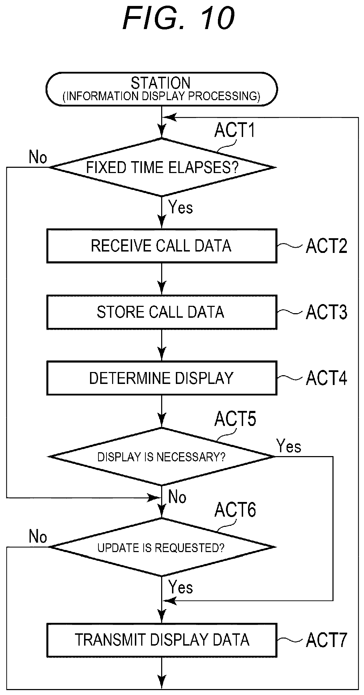

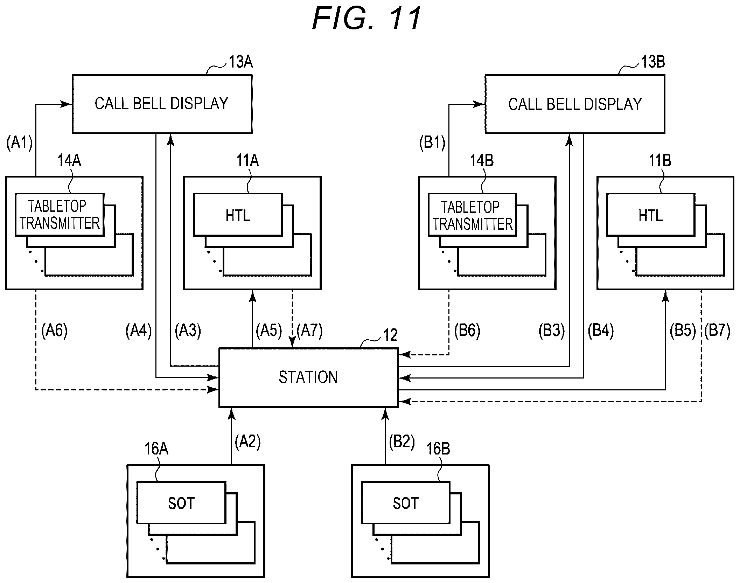

First, information display processing for notifying a call request from a customer to the handy terminal 11 by the station 12 is explained with reference to a flowchart illustrated in FIG. 10. FIG. 11 is a diagram illustrating a flow of data of the terminal control system in this embodiment.

In FIG. 11, to simplify explanation, an example is illustrated in which the call systems 1 (call bell displays 13A and 13B) are set in two areas, that is, an area A (e.g., the first floor of the store) and an area B (e.g., the second floor of the store).

A tabletop transmitter 14A set in the area A transmits a call request including a table number to the call bell display 13A if a call is instructed by a customer ((A1) in FIG. 11). If receiving the call request transmitted from the tabletop transmitter 14A, the call bell display 13A stores the table number, displays the table number on the display device 57, and causes the speaker 58 to output predetermined sound for informing the call to employees. If receiving call requests from a plurality of tabletop transmitters 14A, the call bell display 13A displays the call requests on the display device 57 in order of the reception of the call requests in the display device 57. If receiving an erasing request for a table number from the display eraser 15, the call bell display 13A deletes the stored pertinent table number, erases the display of the display device 57, and changes display order of table numbers corresponding to other call requests.

If a call is instructed by a customer, a self-order terminal 16A set in the area A transmits a call request including a table number to the station 12 through the access point 17 ((A2) in FIG. 11). The station 12 notifies the call request (the table number) received from the self-order terminal 16 to the call bell display 13A ((A3) in FIG. 11). If receiving the call request transmitted from the self-order terminal 16A, the call bell display 13A stores the table number, displays the table number on the display device 57, and causes the speaker 58 to output predetermined sound for informing the call to employees.

All call requests received from the tabletop transmitters 14 and the self-order terminals 16 set in the area A are stored in the call bell display 13A. A table number is displayed in the display device 57.

Similarly, the call bell display 13B receives call requests from a tabletop transmitter 14B and a self-order terminal 16B set in the area B ((B1), (B2), and (B3) in FIG. 11) and executes the same processing as the processing by the call bell display 13A explained above.

If a present fixed time (e.g., 3 seconds) elapses (Yes in Act 1), the processor 41 of the station 12 receives a table number (call data) indicating a call request source stored in the call bell display 13A (Act 2) and causes the RAM 43 or the auxiliary storage device 44 to store the table number (the call data) (Act 3) ((A4) in FIG. 11). If a plurality of call requests (table numbers) are stored in the call bell display 13A, the processor 41 collectively receives all the table numbers as call data. Similarly, the processor 41 of the station 12 receives call data (a table number) from the call bell display 13B and causes the RAM 43 or the auxiliary storage device 44 to store the call data (the table number) ((B4) in FIG. 11).

The call data received from the call bell display 13A indicates table numbers of call request sources received from the tabletop transmitter 14A and the self-order terminal 16Aset in the area A. The call data received from the call bell display 13B indicates table numbers of call request sources received from the tabletop transmitter 14B and the self-order terminal 16B set in the area B.

The processor 41 executes display determination based on the call data received from the call bell displays 13A and 13B (Act 4). In the display determination, the processor 41 performs first determination for determining the handy terminal 11 set as a display target of information corresponding to the call request and second determination for determining whether display data for displaying the information corresponding to the call request is transmitted.

In the first determination, the processor 41 discriminates, referring to the allocation management table, the handy terminal 11 to which a call is notified according to the call data. Since all the call data received from the call bell display 13A are call requests from the area A, the handy terminal 11 used in the area A is the display target. Similarly, since all the call data received from the call bell display 13B are call requests from the area B, the handy terminal 11 used in the area B is the display target. In this case, the processor 41 can determine, referring to only the allocation management table, the handy terminal 11 set as the display target of the information corresponding to the call request.

If the area A is equivalent to the first floor (1F) of the allocation management table illustrated in FIG. 8, an intra-floor area is set in the first floor. In this case, the processor 41 discriminates, referring to the call source management table illustrated in FIG. 9, to which area a table number (table-No.) of the call data belongs and determines, based on a result of the discrimination, the handy terminal 11 set as a display target of the information. For example, a call request including the table number 101 is transmitted from a table set in the area on the north side (N) in the first floor. Therefore, the processor 41 determines, as the display target of the information, the handy terminal 11 indicated by a handy terminal number (HTL-No.) for which the intra-floor area on the north side (N) in the first floor is set in the allocation management table.

In the second determination, the processor 41 determines, based on whether display content is changed from the time when the display data is transmitted to the handy terminal 11 last time, whether the display data is transmitted. For example, the handy terminal 11 displays five table numbers from the top as a list in a call table number list 24A4 in one screen. For example, if there is a change in five table numbers from the top for which display content of the call table number list 24A4 is changed in the handy terminal 11, the processor 41 determines that the transmission of the display data is necessary (Yes in Act 5). A condition for the determination is not limited to the condition that there is a change in five table numbers. For example, if there is a change in at least one table number, the processor 41 may determine that the transmission is necessary.

In this case, the processor 41 transmits the display data to the handy terminal 11 determined by the first determination (Act 7) ((A5) in FIG. 11). Concerning a call from the area A, the processor 41 transmits display data for notifying the call from the area A to only the handy terminal 11 set to belong to the area A and, concerning a call from the area B, the processor 41 transmits display data for notifying the call from the area B to only the handy terminal 11 set to belong to the area B ((B5) in FIG. 11).

In the order input mode, the handy terminal 11 receiving the display data displays the call message 24A3 as illustrated in FIG. 6A. In the idle mode, the handy terminal 11 displays the call table number list 24A4 as illustrated in FIG. 6B and displays table numbers included in the display data as a list. Consequently, a call can be notified to only the handy terminal 11 carried by an employee in charge of an area where a customer requesting the call is present. Therefore, if the call request is notified to the handy terminal 11, the employee can recognize the call request as a call from the customer present in the area that the employee is in charge of. Accordingly, the employee does not need to confirm whether the employee should deal with the notification of the call or another employee should deal with the notification of the call. Confusions do not occur. According to the notification, the employee can immediately shift to customer service corresponding to the call.

If determining in the second determination that the transmission of the display data is unnecessary (No in Act 5), the processor 41 returns to the state of waiting for the fixed time to elapse without transmitting the display data (No in Act 6 to Act 1).

If operation on the update button 24A6 is performed in a state in which the call table number list 24A4 is displayed, the handy terminal 11 transmits an update request for the call table number list 24A4 to the station 12.

If receiving the update request from the handy terminal 11 (Yes in Act 6), the processor 41 of the station 12 transmits, to the handy terminal 11 at an update request source, display data based on call data of an area to which the handy terminal 11 at the update request source belongs. In this case, the processor 41 transmits the display data to the handy terminal 11 at the update request source without performing the second determination.

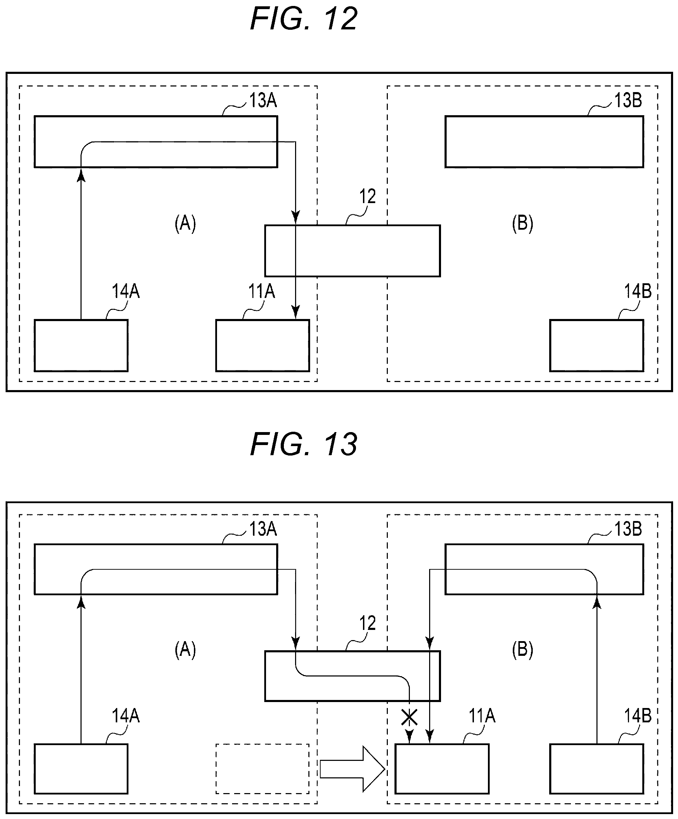

FIG. 12 is a diagram schematically illustrating a relation between the tabletop transmitter 14A that transmits a call request and a handy terminal 11A to which display data is transmitted. As illustrated in FIG. 12, the call request from the tabletop transmitter 14A set in the area A is notified to the handy terminal 11A used in the area A through the call bell display 13A and the station 12.

FIG. 13 illustrates a situation in which the handy terminal 11A used in the area A moves to the area B. For example, this is equivalent to a situation in which an employee in charge of the area A moves to the area B in order to support jobs in the area B. In this case, the allocation management table is changed by change setting processing explained below and updated such that the handy terminal 11A belongs to the area B.

In this case, as illustrated in FIG. 13, a call request from the tabletop transmitter 14A set in the area A is not notified from the station 12 to the handy terminal 11A. A call request from the tabletop transmitter 14B set in the area B is notified to the handy terminal 11A at a moving destination through the call bell display 13B and the station 12 based on the allocation management table changed to setting used in the area B.

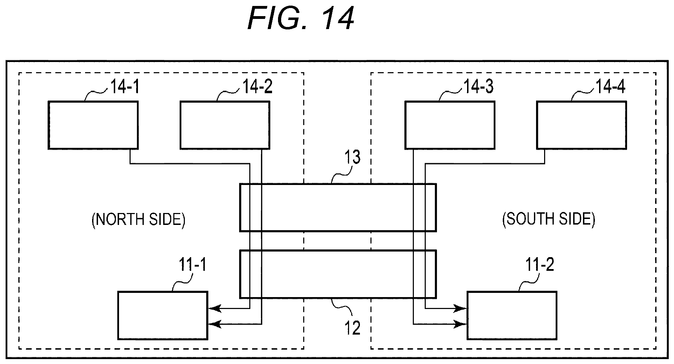

FIG. 14 is a diagram schematically illustrating, if intra-floor areas are set, a relation between the tabletop transmitters 14-1 to 14-4 that transmit call requests and the handy terminals 11-1 and 11-2 to which display data is transmitted.

In FIG. 14, for example, intra-floor areas are set on the north side and the south side in the first floor of the store. Call requests from the tabletop transmitters 14-1 to 14-4 set in the first floor are acquired by the station 12 through the call bell display 13. Concerning call requests from the tabletop transmitters 14-1 and 14-2 set on the north side determined based on the call source management table, the station 12 notifies a call request to the handy terminal 11-1 for which the intra-floor area is set on the north side. Similarly, concerning call requests from the tabletop transmitters 14-3 and 14-4 set on the south side, the station 12 notifies the call request to the handy terminal 11-2 for which the intra-floor area is set on the south side.

In the above explanation, the terminal control system having the configuration illustrated in FIG. 1 is explained. However, if the terminal control system having the configuration illustrated in FIG. 7 is explained, in FIG. 11, the station 12 receives call requests from the tabletop transmitters 14A and 14B not via the call bell displays 13A and 13B ((A6) and (B6) in FIG. 11). If performing customer service corresponding to the call requests, an employee inputs table numbers corresponding to the customer service to the handy terminals 11A and 11B. The handy terminals 11A and 11B notify the table numbers corresponding to the customer service to the station 12 ((A7) and (B7) in FIG. 11). The station 12 updates displays of the call bell displays 13A and 13B according to the notifications from the handy terminals 11A and 11B.

Change setting processing of the terminal control system in this embodiment is explained. The change setting processing is executed, for example, if an employee carrying the handy terminal 11 shifts to jobs in another area in the store.

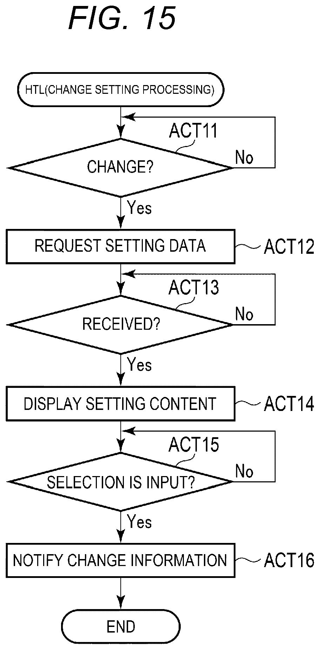

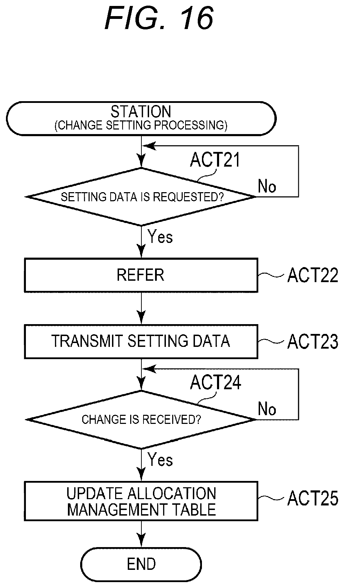

FIG. 15 is a flowchart illustrating the change setting processing in the handy terminal 11. FIG. 16 is a flowchart illustrating the change setting processing in the station 12.

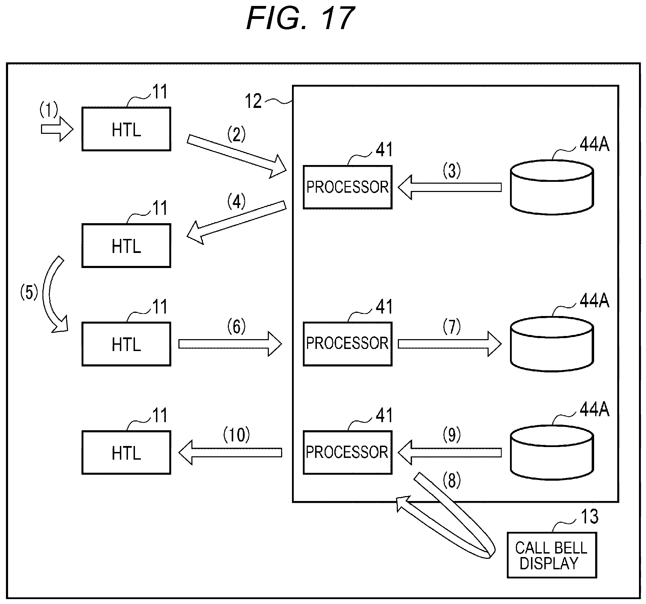

FIG. 17 is a diagram illustrating a flow of processing in the handy terminal 11 and the station 12 in execution of the change setting processing.

For example, if the execution of the change setting processing is instructed by operation on the keyboard 25 (Yes in Act 11 in FIG. 15) ((1) in FIG. 17), the processor 31 of the handy terminal 11 notifies an handy terminal number (HTL-No.) of the handy terminal 11 to the station 12 and requests transmission of setting data in the present allocation management table (Act 12) ((2)) in FIG. 17).

If the transmission of the setting data is requested from the handy terminal 11 (Yes in Act 21 in FIG. 16), the processor 41 of the station 12 refers to, based on the handy terminal number received from the handy terminal 11, an allocation management table 44A stored in the auxiliary storage device 44 (Act 22) ((3) in FIG. 17). The processor 41 transmits, to the handy terminal 11 at a request source, setting data, that is, an assigned floor(and an intra-floor area) corresponding to the handy terminal number received from the handy terminal 11 stored in the allocation management table 44A (Act 23) ((4) in FIG. 17).

If receiving the setting data from the station 12 (Yes in Act 13), the processor 31 of the handy terminal 11 causes the display section 24A of the touch panel 24 to display a setting screen including the present setting content indicated by the setting data.

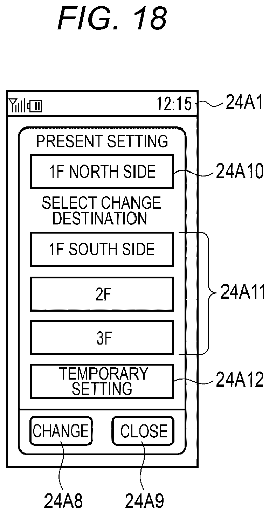

FIG. 18 is a diagram illustrating an example of a setting screen displayed on the display section 24A of the handy terminal 11. A change button 24A8, a close button 24A9, a setting content 24A10, a selection area button 24A11, and a temporary setting button 24A12 are provided in the setting screen illustrated in FIG. 18.

The change button 24A8 is a button for instructing the station 12 to change the allocation management table. The close button 24A9 is a button for instructing an end of the change setting processing. The setting content 24A10 indicates a present set area indicated by the setting data received from the station 12. FIG. 18 shows that, at present, an area is set is set on "IF south side". The selection area button 24A11 is a button for inputting designation of an area after the change. FIG. 18 shows that any one of "IF south side", "2F", and "3F" can be selected. The temporary setting button 24A12 is a button for instructing setting of temporary data of the allocation management table. If temporary data is not designated by the temporary setting button 24A12, the setting data is changed. In the handy terminal 11, only the temporary data of the allocation management table may be able to be set. The setting data may be able to be changed, in the station 12, by operation using a not-illustrated input device (a keyboard, etc.) connected by wire or radio.

An employee shifting to jobs in another area performs operation for selecting another area at a moving destination from the selection area button 24A11 after confirming the present setting content displayed in the setting content 24A10. If detecting operation for selecting any one button of the selection area button 24A11 (Yes in Act 15), the processor 31 of the handy terminal 11 transmits, to the station 12, change information including the selected area and presence or absence of temporary setting (Act 16) ((6)) in FIG. 17).

If receiving the change information from the handy terminal 11 (Yes in Act 24), the processor 41 of the station 12 updates the allocation management table 44A stored in the auxiliary storage device 44 (Act 25) ((7) in FIG. 17). The processor 41 changes, according to the change information, an assigned floor (and an intra-floor area) corresponding to a handy terminal number (HTL-No.) of the handy terminal 11 at a change request source. If temporary setting is instructed, the processor 41 adds temporary data to the allocation management table. If temporary setting is not instructed, the processor 41 updates the setting data.

The allocation management table 44A is updated in this way. Consequently, if a readout request is acquired from the call bell display 13 ((8)) in FIG. 17), the processor 41 of the station 12 can determine the handy terminal 11 corresponding to the call request referring to setting data (or temporary data) of the updated allocation management table 44A ((9) in FIG. 17) and notify the call request (transmit display data).

In this way, in the terminal control system in this embodiment, it is possible to notify the wall request to the handy terminal 11 used in the area where the tabletop transmitter 14 or the self-order terminal 16 that transmits the call request is set. Consequently, an employee to whom the call request is notified by the handy terminal 11 can recognize that the employee should perform customer service. Therefore, the employee does not need to confirm whether the employee should deal with the notification of the call request or another employee should deal with the notification of the call request. Confusions are unlikely to occur. If the employee moves to another area, it is possible to receive a call request in the area at a moving destination by designating a change of an in-charge area in the handy terminal 11. In this way, in response to a call from a customer, it is possible to notify the call to an appropriate handy terminal 11 corresponding to a situation of the employee.

In the allocation management table illustrated in FIG. 8, only one area where the handy terminal 11 is used is set according to one handy terminal number (HTL-No.). However, a plurality of areas may be able to be set. For example, setting data (or temporary data) is set to indicate that the handy terminal 11 carried by an employee in charge of the first floor and the second floor is used in the first floor and the second floor. Consequently, the employee can receive a notification of a call request irrespective of whether the employee is present in the first floor or the second floor. Further, the handy terminal 11 that does not notify a call request may be able to be set in the allocation management table.

In the above explanation, if the employee carrying the handy terminal 11 moves to another area, the allocation management table is changed by the change setting processing executed according to the operation by the employee. However, the allocation management table may be changed according to other methods.

For example, a detection system that detects the position of the handy terminal 11 is provided in the store. For example, beacons are set in places (e.g., floors) in the store. If receiving a signal from a beacon set at a moving destination according to movement between floors, the handy terminal 11 notifies the signal to the station 12. The station 12 detects the movement of the handy terminal 11 according to the notification from the handy terminal 11 and updates the allocation management table according to the floor at the moving destination. It is also possible to detect, using short-range wireless communication, a wireless communication range of which is limited to, for example, each floor, the position of the handy terminal 11 based on communication with a wireless device set in which floor is possible. Further, as a method of detecting the position of the handy terminal 11, an area may be determined based on position information detected by a GPS (Global Positioning System) in the outdoor or the like.

The several embodiments are explained above. However, the embodiments are presented as examples and are not intended to limit the scope of the invention. These new embodiments can be implemented in other various forms. Various omissions, substitutions, and changes can be made without departing from the scoep of the invention. These embodiments and modifications of the embodiments are included in the scope and the gist of the invention and included in the inventions described in claims and the scope of equivalents of the inventions.

The processing described in the embodiment explained above can be provided to various devices as a computer-executable computer program while being written in a recording medium such as a magnetic disk (a flexible disk, a hard disk, etc.), an optical disk (a CD-ROM, a DVD, etc.), or a semiconductor memory. The processing can also be transmitted by a communication medium and provided to the various devices. A computer reads the computer program recorded in the recording medium or receives the computer program via the communication medium. The operation of the computer is controlled by the computer program, whereby the computer executes the processing explained above.

## Claims

1. A control device comprising:
a storing section configured to store, concerning each of a plurality of terminal devices that output information, setting data indicating a part of an area where the terminal device is used; and
a control section configured to output, in response to a call request transmitted from a transmitter, based on a setting area where the transmitter at a call request source is set and the setting data, information corresponding to the call request to the terminal device used in an area corresponding to the setting area indicated by the setting data among the plurality of terminal devices.

2. The device according to claim 1, further comprising a change setting section configured to change the area indicated by the setting data corresponding to each of the terminal devices.

3. The device according to claim 2, wherein the change setting section sets temporary data indicating an area corresponding to the terminal device, the temporary data enabling notification of a call request in a preset fixed period.

4. The device according to any one of claims 1 to 3, wherein the control section causes the storing section to store call data indicating call requests transmitted from a plurality of the transmitters, the call requests being received from a plurality of receiving devices respectively set in a different plurality of the setting areas, and outputs information corresponding to the call requests to the terminal device used in an area corresponding to the setting area where the transmitter at a transmission source of the call data is set.

5. A terminal control system comprising:
a plurality of terminal devices configured to output information and;
the control device according to any one of claims 1 to 4.

6. A method for controlling a plurality of terminal devices, the method comprising steps of:
storing, concerning each of the plurality of terminal devices that output information, setting data indicating a part of an area where the terminal device is used; and
outputting, in response to a call request transmitted from a transmitter, based on a setting area where the transmitter at a call request source is set and the setting data, information corresponding to the call request to the terminal device used in an area corresponding to the setting area indicated by the setting data among the plurality of terminal devices.

7. The method according to claim 6, further comprising a step of:
changing the area indicated by the setting data corresponding to each of the terminal devices.

8. The method according to claim 6 or 7, further comprising a step of:
setting temporary data indicating an area corresponding to the terminal device, the temporary data enabling notification of a call request in a preset fixed period.

9. The method according to any one of claims 6 to 8, further comprising a step of:
storing call data indicating call requests transmitted from a plurality of the transmitters, the call requests being received from a plurality of receiving devices respectively set in a different plurality of the setting areas, and outputs information corresponding to the call requests to the terminal device used in an area corresponding to the setting area where the transmitter at a transmission source of the call data is set.

10. A computer program comprising instructions which, when the program is executed by a computer, cause the computer to carry out the steps of the method according to any one of claims 6 to 9.

11. A computer-readable medium having stored thereon the computer program of claim 10.
